# FASCICULE DE BREVET EUROPEEN

(11) **EP 1 809 155 B1**
(45) Date de publication et mention de la délivrance du brevet: **07.07.2010**
(21) Numéro de dépôt: 05815254.7
(22) Date de dépôt: 04.11.2005
(51) Int. Cl.: A47J 43/08

(54) **APPAREIL ELECTROMENAGER DE PREPARATION CULINAIRE COMPORTANT UN SOCLE MUNI DE DIFFERENTES EMPREINTES**
ELEKTRISCHES HAUSHALTSGERÄT ZUR HERSTELLUNG VON LEBENSMITTELN MIT EINER BASIS MIT VERSCHIEDEN GEFORMTEN AUSSPARUNGEN
ELECTRIC FOOD PREPARATION HOUSEHOLD APPLIANCE COMPRISING A BASE PROVIDED WITH DIFFERENTLY SHAPED RECESSES

(30) Priorité: 10.11.2004 FR 0411955
(43) Date de publication de la demande: 25.07.2007
(73) Titulaire: SEB SA, 69130 Ecully (FR)
(72) Inventeur: MARTIN, Philippe, F-53940 Le Genest Saint Isle (FR)
(74) Mandataire: Kiehl, Hubert
(86) Numéro de dépôt international: PCT/FR2005/002739
(87) Numéro de publication internationale: WO 2006/051187

(56) Documents cités:
- DE-B- 1 190 151
- US-A- 1 926 910
- US-A- 2 552 054
- US-A- 2 616 673
- US-A- 4 297 038

## Description

La présente invention se rapporte à un appareil électroménager de préparation culinaire comportant un boîtier adjacent à un socle muni de différentes empreintes destinées à recevoir des récipients de hauteurs différentes recevant un outil de travail rotatif, l'appareil comportant un bras de transmission s'étendant au-dessus du récipient lors du fonctionnement de l'appareil pour entraîner par le dessus l'outil de travail rotatif.

La présente invention concerne plus particulièrement, mais non exclusivement, un appareil électroménager multifonction pouvant recevoir plusieurs types de récipients tels qu'un récipient large et peu profond pour le malaxage de pâtes, la réalisation de préparations hachées, de mélanges, de préparations râpées, émincées ou un récipient plus haut et plus étroit, de type blender, plus particulièrement prévu pour des préparations de type liquide.

Différents documents connus présentent des appareils électroménagers de préparation culinaire munis d'empreintes disposées en différents endroits destinées à recevoir des récipients de dimensions différentes.

Le document US 2 687 284 décrit un appareil de préparation culinaire en forme de L pouvant être utilisé avec différentes formes de récipients en déplaçant l'unité motrice soit au-dessus du bâti pour entraîner par le haut des outils au-dessus d'un récipient type bol, soit latéralement au bâti pour entraîner par le bas un outil de coupe au sein d'un récipient plus haut et de diamètre inférieur de type blender.

Cependant, une telle solution présente les inconvénients de l'encombrement dû au volume total du dispositif ainsi que du poids et de l'encombrement des éléments à déplacer ou à mettre en place par l'utilisateur.

De plus, dans le récipient de type blender, l'outil de travail est entraîné par le dessous et reste en permanence dans le fond du récipient. De ce fait, le récipient présente un manque de commodité au niveau de son nettoyage et un risque de blessure non négligeable.

Il est connu, du document DE 1 190 151, de remédier à cet inconvénient en proposant un appareil de préparation culinaire pouvant être utilisé indifféremment avec un récipient de type bol ou avec un récipient de hauteur supérieure de type blender au sein duquel des outils de travail sont entraînés par le dessus. Ce dispositif possède un socle muni d'empreintes de calage des récipients, un boîtier contenant un moteur et un bras de transmission comportant l'axe entraîneur. Lorsque le bras est en position opérationnelle, l'axe entraîneur, est à une hauteur fixe relativement proche de celle à laquelle parvient le récipient le plus haut. De manière à compenser l'écart avec le récipient le plus bas de type bol, celui-ci est muni d'outils de travail comportant de longues tiges de guidage et d'un couvercle de hauteur importante évitant qu'une partie de l'arbre de l'outil soit accessible lors de sa mise en rotation.

Une telle solution permet, au sein d'un dispositif plus compact et mécaniquement plus simple, d'utiliser des récipients de hauteurs différentes dont les outils de travail sont entraînés par le dessus ; ainsi, le récipient de type blender, ne possédant plus d'outil coupant en son fond, s'avère plus fonctionnel et présente un risque potentiel de blessure moindre. Cependant, une telle solution présente l'inconvénient de l'encombrement des outils de travail et du couvercle destinés au récipient de type bol. Un autre appareil similaire est connu du document US 1926910.

Aussi, un but de la présente invention est de remédier à ces inconvénients en proposant un appareil électroménager de préparation culinaire multifonction, compact, peu encombrant et relativement simple mécaniquement, offrant la possibilité d'être utilisé avec des récipients de hauteurs différentes, destinés à des préparations différentes, tels qu'un récipient large et peu profond pour le malaxage de pâtes, ou un récipient plus haut et plus étroit, de type blender, particulièrement prévu pour des préparations de type liquide et dont les outils de travail rotatifs peuvent être entraînés par le dessus. Un récipient adapté pour recevoir un accessoire du type petit préparateur culinaire pour le hachage du persil ou des oignons peut également être envisagé ainsi que des récipients pour d'autres fonctions culinaires telles que sorbetière, pétrin...

De plus, les récipients, ainsi que l'ensemble des éléments composant le dispositif, doivent présenter des avantages pratiques, esthétiques et sécuritaires supplémentaires.

A cet effet, l'invention a pour objet un appareil électroménager de préparation culinaire selon la revendication 1.

Par hauteur, nous entendons la distance relative à la surface d'appui de l'appareil.

Dans le cas de l'utilisation des récipients sans couvercle, une telle caractéristique présente l'avantage, pour l'ensemble des récipients, d'optimiser la distance entre le bord du récipient et les moyens d'entraînement de sorte que l'arbre des outils soit peu accessible lors de sa mise en rotation ; cette dernière caractéristique améliorant le niveau de sécurité de l'appareil.

Dans le cas de l'utilisation des récipients avec leurs couvercles, une telle caractéristique présente l'avantage de conduire à l'utilisation de couvercles de hauteurs similaires pour chacun des récipients, cette hauteur pouvant être réduite pour optimiser le volume utile des récipients et limiter l'encombrement des couvercles ainsi que les contraintes pratiques et esthétiques liées à l'utilisation de couvercles volumineux.

Selon une autre caractéristique de l'appareil, la surface inférieure du bras de transmission, lors du fonctionnement de l'appareil, parvient sensiblement à la hauteur à laquelle parviennent les bords supérieurs de tous les récipients.

Une telle caractéristique présente l'avantage de réduire au maximum la distance entre le bord supérieur du récipient et les moyens d'entraînement, ceux-ci étant placés au niveau de la surface inférieure du bras de transmission.

Selon une autre caractéristique de l'appareil, chacun desdits récipients est muni d'un couvercle disposant d'une cavité de réception du bras de transmission s'engageant dans cette cavité lorsque l'appareil est en position de fonctionnement.

Cette caractéristique permet d'immobiliser le couvercle en rotation et offre plusieurs avantages : elle permet de réduire l'encombrement en hauteur de l'appareil et offre un avantage sécuritaire supplémentaire, lorsque le récipient est muni d'un couvercle, en isolant et en rendant inaccessible tous les éléments mis en rotation lors du fonctionnement de l'appareil.

Selon une autre caractéristique de l'appareil, la partie du bras de transmission s'engageant dans la cavité de réception est au moins partiellement recouverte d'un matériau souple.

Cette caractéristique permet d'amortir les vibrations et de récupérer d'éventuels jeux au niveau des couvercles.

Selon une autre caractéristique de l'appareil, ledit bras de transmission peut pivoter par rapport audit boîtier.

Cette caractéristique perme de mettre en place et de dégager les récipients, leurs outils et couvercles aisément et sans être gêné par le bras qui peut être placé en position haute lors de ces manipulations.

Selon une autre caractéristique de l'appareil selon l'invention, le couvercle peut être solidaire du bras de transmission. Une telle caractéristique permet de rendre le récipient et ses ingrédients accessibles lors de la levée du bras.

Selon une autre caractéristique de l'appareil, lesdites empreintes sont constituées de cavités de différentes profondeurs.

Selon une autre caractéristique de l'appareil, lesdites empreintes de réception des récipients sont concentriques.

Cette caractéristique permet d'obtenir un appareil plus compact et moins encombrant.

Selon une autre caractéristique de l'appareil, chacune des empreintes de réception des récipients possède un système de calage permettant d'orienter les récipients par rapport au boîtier de l'appareil.

Selon une autre caractéristique de l'invention, l'appareil est muni d'un moteur et dispose, au niveau du bras de transmission, d'un système de détection des couvercles des récipients coopérant avec un dispositif de commande du moteur pour empêcher la mise en marche du moteur lorsque le couvercle n'est pas détecté.

Cette caractéristique permet d'améliorer la sécurité du dispositif.

Selon une autre caractéristique de l'appareil, le système de détection des couvercles des récipients comporte un interrupteur porté par le bras de transmission au niveau de sa surface inférieure, cet interrupteur coopérant avec un pion porté par le couvercle du récipient.

Cette caractéristique permet d'avoir un système de détection commun aux couvercles des différents récipients.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil électroménager de préparation culinaire selon l'invention avec un récipient muni d'un couvercle en place;
- la figure 2 est une vue en perspective du même appareil présenté sans récipient ;
- la figure 3 est une vue en perspective du récipient présenté au niveau de la figure 1 muni de son couvercle ;
- la figure 4 est une vue en perspective de la mise en place d'un ensemble d'outils de travail au sein du récipient de la figure 3 placé sur le même appareil électroménager ;
- la figure 5 est une vue en perspective du même appareil électroménager présenté avec un autre récipient plus haut et plus étroit, de type blender, muni de son couvercle en place ;
- la figure 6 est une vue en perspective du récipient de type blender présenté au niveau de la figure 5 ;
- la figure 7 est une vue en perspective de la mise en place de l'outil de travail au sein du récipient de type blender placé sur le même appareil électroménager.

Seuls les éléments nécessaires à la compréhension de l'invention ont été représentés. Pour faciliter la lecture des dessins les mêmes éléments portent les mêmes références d'une figure à l'autre.

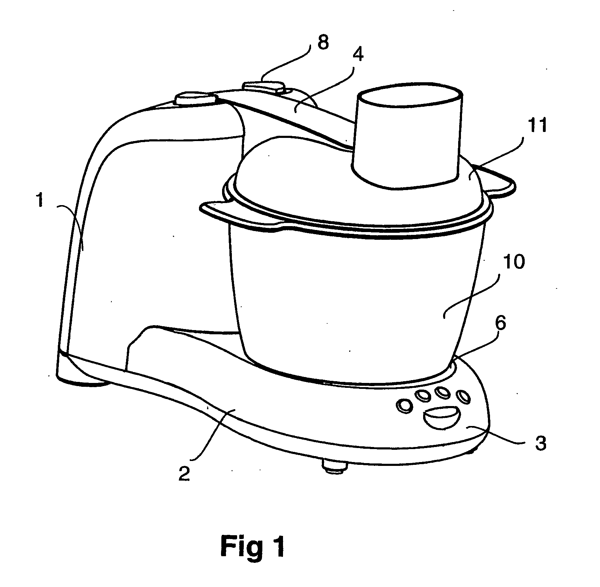

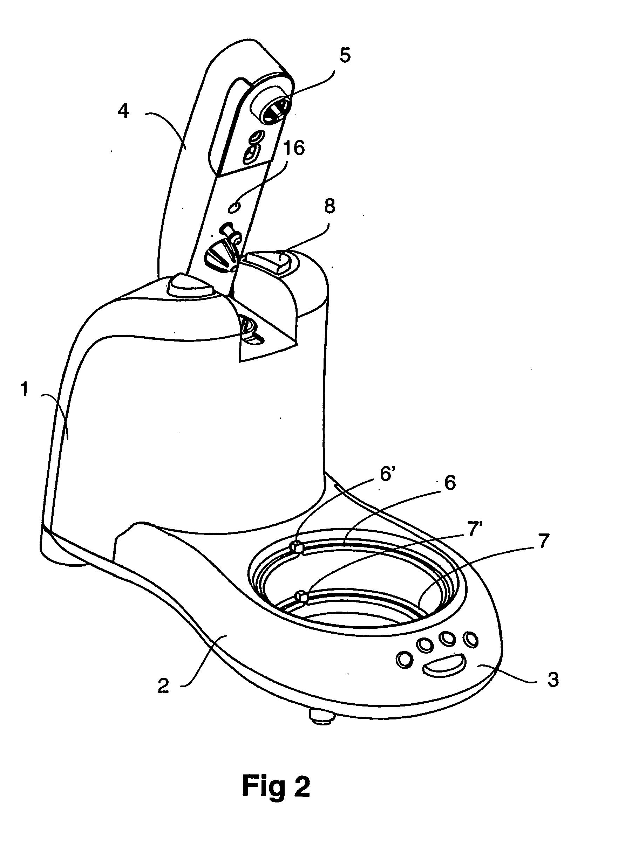

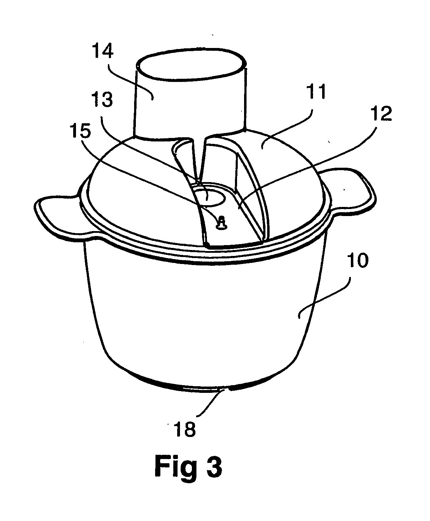

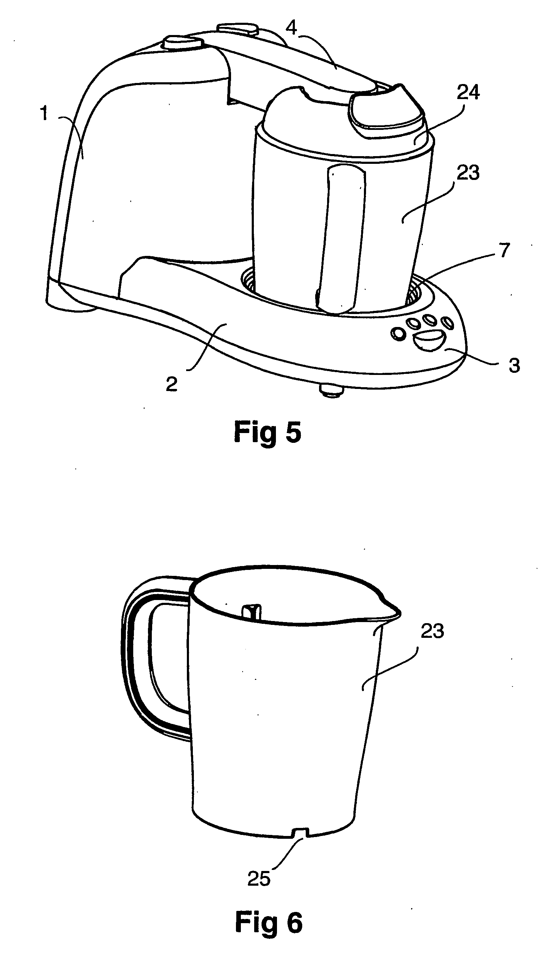

Les figures 1 et 2 présentent un appareil électroménager de préparation culinaire comportant un boîtier 1 renfermant un moteur, non représenté sur les figures. Le boîtier 1 est adjacent à un socle 2 de réception destiné à recevoir des récipients de travail 10 et 23 , tels qu'illustrés en détail aux figures 3 et 6; le socle 2 comportant un panneau de commande 3 permettant à l'utilisateur de contrôler la mise en marche et le fonctionnement du moteur.

Sur la figure 1, l'appareil électroménager est présenté avec le récipient 10 de grand diamètre et de hauteur moyenne muni d'un couvercle 11.

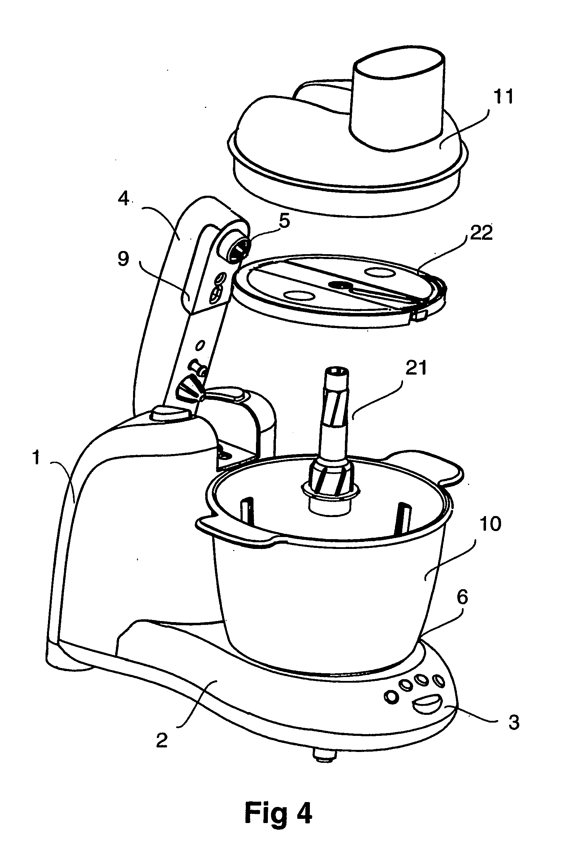

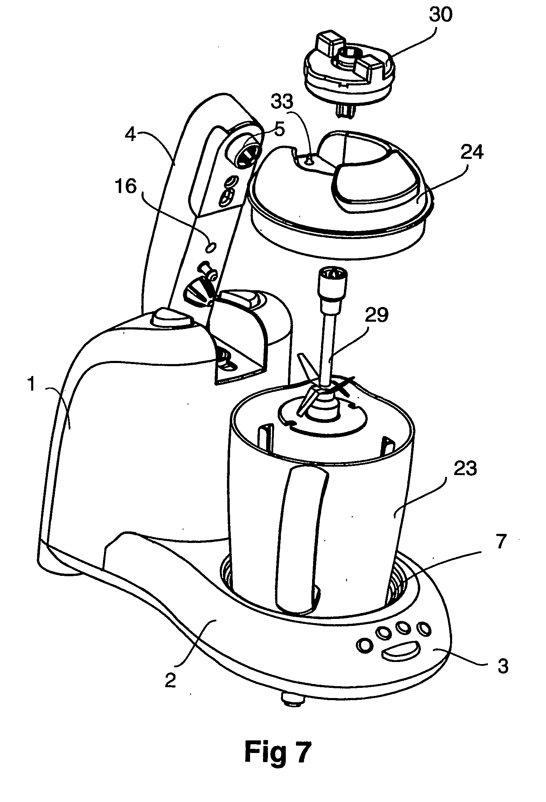

Le boîtier 1 de l'appareil supporte, au niveau de sa surface supérieure, un bras de transmission 4 pouvant pivoter par rapport au boîtier 1, sa position étant modifiable grâce à l'actionnement des boutons-poussoirs 8 placés de part et d'autre du bras 4. Le bras de transmission 4 comporte, sur sa surface inférieure, un axe entraîneur 5 destiné à mettre en mouvement rotatif, par le dessus, différents outils de travail 21, 22, 29, tels qu'illustrés sur les figures 4 et 7, à l'intérieur des récipients 10, 23. Lors de la réalisation de la préparation, le bras 4 sera placé en position basse, puis il sera relevé afin de dégager les éléments une fois la préparation réalisée.

Plus particulièrement, selon l'invention, le socle 2 est muni de deux empreintes 6 et 7 circulaires et concentriques dont les formes sont destinées à coopérer respectivement avec les formes inférieures des récipients 10 et 23.

Ces deux empreintes 6 et 7 disposent d'un système de calage composé de reliefs 6' et 7' orientant les récipients 10 et 23 par rapport au boîtier 1.

La figure 3 représente une vue de détail du récipient de type bol 10 muni de son couvercle 11.

Le récipient de type bol 10 se place sur l'empreinte 6 la moins profonde du socle 2.

Le fond extérieur du récipient 10 dispose de deux encoches 18, diamétralement opposées, venant se positionner au niveau du système de calage constitué du relief 6' de l'empreinte 6 de manière à orienter le récipient 10 par rapport au boîtier 1.

Le couvercle 11 comporte une cavité de réception 12 dans laquelle vient s'insérer le bras de transmission 4 immobilisant ainsi le couvercle 11 en rotation. Cette cavité de réception 12 comprend un orifice 13 de manière à laisser passer, au travers du couvercle 11, l'axe entraîneur 5.

Le couvercle 11 dispose également d'une goulotte 14 permettant d'incorporer des aliments en cours de préparation.

Le couvercle 11 comporte, au niveau de la cavité de réception 12 du bras de transmission 4, un pion 15 en relief actionnant, lorsque le bras 4 est en position baissée, un interrupteur porté par le bras en s'insérant dans une ouverture 16 située au niveau de la surface inférieure du bras de transmission 4. Ce dispositif constitue un système de détection du couvercle conçu de sorte que le système ne peut fonctionner que si un couvercle est détecté.

La figure 4 présente la mise en place d'un ensemble d'outils de travail 21 et 22 au sein d'un récipient de type bol 10. Un outil de tranchage 22 est présenté à titre d'exemple.

L'utilisateur place le récipient 10 au niveau de l'empreinte 6 du socle 2 puis une tige de guidage 21 possédant, en son extrémité inférieure, une partie femelle qui viendra coopérer avec une pièce métallique surmoulée située en permanence dans le fond du récipient 10. Il place ensuite un disque support de lames tranchantes 22 disposant d'un orifice central qui vient s'engager sur l'extrémité supérieure de la tige de guidage 21 puis il place le couvercle 11 et rabat le bras de transmission 4 dans sa position opérationnelle, le bras disposant d'une épaisseur surmoulée 9, formée d'un matériau souple, dont le but est d'amortir les vibrations et de récupérer d'éventuels jeux au niveau du couvercle 11.

La figure 5 présente le même appareil électroménager que celui présenté précédemment avec un autre récipient de type blender 23 muni d'un couvercle 24.

Ce récipient est placé sur l'empreinte 7 la plus profonde du socle 2 de réception de manière à ce que le bord supérieur du récipient 23 parvienne au niveau de la partie inférieure du bras de transmission 4 lorsqu'il est placé en position basse.

La figure 6 présente une vue de détail du récipient de type blender 23.

En comparaison avec le récipient 10 décrit précédemment, ce récipient est plus profond et plus étroit, particulièrement au niveau de sa base où le volume intérieur est réduit.

Le récipient 23 possède, au niveau de sa surface latérale extérieure, une anse, au niveau de son bord supérieur, un bec verseur et sur la paroi extérieure de sa base , deux encoches symétriques 25. L'utilisateur place une de ces encoches au niveau du relief 7' du système de calage de l'empreinte 7 du socle 2 orientant le récipient par rapport au boîtier 1.

La figure 7 présente la mise en place des éléments pour le dispositif utilisé avec le récipient de type blender 23.

Après avoir placé le récipient 23 sur l'empreinte 7 du socle 2 de réception, l'utilisateur place un outil coupant 29 à l'intérieur du récipient 23. Cet outil coupant 29 comporte une coupole disposant de deux encoches venant se caler sur deux nervures disposées dans le fond du récipient, l'ensemble formé par la tige et les lames étant libre en rotation par rapport à la coupole.

L'outil coupant 29 n'est donc pas solidaire du récipient 23 contrairement aux récipients traditionnels de type blender. Cette caractéristique présente un avantage pratique au niveau du nettoyage ainsi qu'un avantage sécuritaire vis-à-vis des risques de blessures. De plus, une utilisation secondaire des récipients pourra être envisagée.

De manière à augmenter la vitesse de rotation de l'outil de travail lors de l'utilisation du récipient de type blender 23, un accélérateur 30 est mis en place au-dessus du couvercle 24 disposant d'un emplacement prévu à cet effet. L'accélérateur 30 possède, sur sa surface orientée vers le bas, une partie mâle qui s'engage sur l'extrémité supérieure de type femelle de la tige de l'outil coupant 29. Au niveau de sa surface orientée vers le haut, l'accélérateur possède une partie femelle qui s'emmanche sur l'axe entraîneur 5.

Le couvercle 24 comporte un pion 33 en relief actionnant, lorsque le bras 4 est en position baissée, un interrupteur en s'insérant dans l'ouverture 16 située au niveau de la surface inférieure du bras de transmission 4.

Ce système de détection du couvercle, présenté précédemment, est commun aux couvercles associés aux deux types de récipients.

L'appareil précédemment décrit présente l'avantage de posséder des couvercles de faible hauteur pour les deux types de récipients permettant ainsi de limiter leur encombrement.

Un tel appareil présente également l'avantage de posséder des récipients de travail ne comportant pas d'orifice dans leur fond et ayant des outils de travail amovibles. Ces caractéristiques facilitent le nettoyage, limitent les risques de blessure et permettent une utilisation secondaire de ces récipients pouvant être placés à table, pouvant servir de récipients de conservation avec des couvercles prévus à cet effet.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée, l'appareil pourra comporter plusieurs arbres d'entraînement décalés au niveau du bras, agissant à des vitesses différentes, entraînant des outils de travail par le dessus au sein de récipients placés sur des empreintes de réception décalées au niveau du socle.

Dans une autre variante de réalisation non représentée, l'appareil pourra comporter un socle muni de plusieurs empreintes constituées de reliefs plutôt que de cavités.

## Revendications

1. Appareil électroménager de préparation culinaire comportant des récipients (10, 23) de hauteurs différentes et en particulier un récipient (10) large et peu profond pour le malaxage de pâtes et un récipient (23) plus haut et plus étroit, de type blender, pour des préparations de type liquide, l'appareil comportant également un boîtier (1) adjacent à un socle (2) muni de différentes empreintes (6, 7) destinées à recevoir lesdits récipients (10, 23), un bras de transmission (4) s'étendant au-dessus du récipient (10, 23) lors du fonctionnement de l'appareil, ledit bras de transmission (4) comportant des moyens d'entraînement (5) par le dessus d'un outil de travail rotatif (21, 22, 29), **caractérisé en ce que** chacune desdites empreintes (6, 7) dudit socle (2) possède une forme adaptée pour coopérer avec la forme du récipient qui lui est associé de manière à faire parvenir les bords supérieurs de tous les récipients (10, 23) au niveau d'une même hauteur.

2. Appareil électroménager de préparation culinaire selon la revendication 1, **caractérisé en ce que** la surface inférieure du bras de transmission (4), lors du fonctionnement de l'appareil, parvient sensiblement à la hauteur à laquelle parviennent les bords supérieurs de tous les récipients (10, 23).

3. Appareil électroménager de préparation culinaire selon la revendication 1 ou 2, **caractérisé en ce que** chacun desdits récipients (10, 23) est muni d'un couvercle (11, 24) disposant d'une cavité de réception (12) dudit bras de transmission (4) s'engageant dans cette cavité (12) lorsque l'appareil est en position de fonctionnement.

4. Appareil électroménager de préparation culinaire selon la revendication 3, **caractérisé en ce que** la partie du bras de transmission s'engageant dans la cavité de réception est au moins partiellement recouverte d'un matériau souple.

5. Appareil électroménager de préparation culinaire selon l'une quelconque des revendications 1 à 4, **caractérisé en ce que** ledit bras de transmission (4) peut pivoter par rapport audit boîtier (1).

6. Appareil électroménager de préparation culinaire selon l'une quelconque des revendications 3 à 5, **caractérisé en ce que** le couvercle (11, 24) peut être solidaire du bras de transmission (4).

7. Appareil électroménager de préparation culinaire selon l'une quelconque des revendications 1 à 6, **caractérisé en ce que** lesdites empreintes (6, 7) de réception des récipients (10, 23) sont constituées de cavités de différentes profondeurs.

8. Appareil électroménager de préparation culinaire selon l'une quelconque des revendications 1 ou 7, **caractérisé en ce que** lesdites empreintes (6, 7) de réception des récipients (10, 23) sont concentriques.

9. Appareil électroménager de préparation culinaire selon l'une quelconque des revendications 1 à 8, **caractérisé en ce que** chacune desdites empreintes (6, 7) de réception des récipients (10, 23) possède un système de calage (6',7') permettant d'orienter les récipients (10, 23) par rapport au boîtier (1) de l'appareil.

10. Appareil électroménager de préparation culinaire selon l'une quelconque des revendications 1 à 9, **caractérisé en ce que** l'appareil étant muni d'un moteur dispose, au niveau dudit bras de transmission (4), d'un système de détection des couvercles (11, 24) desdits récipients (10, 23) coopérant avec un dispositif de contrôle du moteur pour empêcher la mise en marche du moteur lorsque le couvercle (11, 24) n'est pas détecté.

11. Appareil électroménager de préparation culinaire selon la revendication 10, **caractérisé en ce que** ledit système de détection des couvercles (11, 24) desdits récipients (10, 23) comporte un interrupteur porté par le bras de transmission (4) au niveau de sa surface inférieure, cet interrupteur coopérant avec un pion (15, 33) porté par le couvercle (11, 24) du récipient (10, 23).

## Claims

1. Electrical food preparation household appliance comprising containers (10, 23) of different heights and in particular a wide and shallow container (10) for mixing dough and a taller and narrower container (23), such as a blender, for liquid preparations, the appliance also comprising a housing (1) adjacent to a base (2) provided with differently shaped recesses (6, 7) intended to receive said containers (10, 23), a transmission arm (4) extending over the container (10, 23) when the appliance is in operation, said transmission arm (4) comprising drive means (5) at the top of a rotary working tool (21, 22, 29), **characterised in that** each of said recesses (6, 7) of said base (2) has a shape that is adapted for cooperating with the shape of the container associated with it so that the upper edges of all the containers (10, 23) reach the same height.

2. Electrical food preparation household appliance according to claim 1, **characterised in that** the inner surface of the transmission arm (4), when the appliance is in operation, substantially reaches the height to which the upper edges of all the containers (10, 23) reach.

3. Electrical food preparation household appliance according to claim 1 or 2, **characterised in that** each of said containers (10, 23) is provided with a lid (11, 24) having a cavity (12) to receive said transmission arm (4) that is engaged in this cavity (12) when the appliance is in operation position.

4. Electrical food preparation household appliance according to claim 3, **characterised in that** the part of the transmission arm engaging in the reception cavity is at least partially covered with a flexible material.

5. Electrical food preparation household appliance according to any one of claims 1 to 4, **characterised in that** said transmission arm (4) can rotate with respect to said housing (1).

6. Electrical food preparation household appliance according to any one of claims 3 to 5, **characterised in that** the lid (11, 24) can be integral with the transmission arm (4).

7. Electrical food preparation household appliance according to any one of claims 1 to 6, **characterised in that** said recesses (6, 7) for receiving the containers (10, 23) are made up of cavities of different depths.

8. Electrical food preparation household appliance according to any one of claims 1 or 7, **characterised in that** said recesses (6, 7) for receiving the containers (10, 23) are concentric.

9. Electrical food preparation household appliance according to any one of claims 1 to 8, **characterised in that** each of said recesses (6, 7) for receiving the containers (10, 23) has a setting system (6',7') to orient the containers (10, 23) with respect to the appliance's housing (1).

10. Electrical food preparation household appliance according to any one of claims 1 to 9, **characterised in that** the appliance being fitted with a motor has, on said transmission arm (4), a system to detect the lids (11, 24) of said containers (10, 23) cooperating with a motor control device to prevent the motor from being switched on when the lid (11, 24) is not detected.

11. Electrical food preparation household appliance according to claim 10, **characterised in that** said system of detecting the lids (11, 24) of said containers (10, 23) comprises a switch carried by the transmission arm (4) in its inner surface, this switch cooperating with a pin (15, 33) carried by the lid (11, 24) of the container (10, 23).

## Patentansprüche

1. Elektrohaushaltsgerät für kulinarische Zubereitungen, umfassend unterschiedlich hohe Behälter (10, 23) und insbesondere einen breiten und wenig tiefen Behälter (10) zum Kneten von Teigen und einen höheren und schmaleren Behälter (23), von der Art eines Standmixers, für Zubereitungen flüssiger Art, wobei das Gerät ebenfalls ein Gehäuse (1) umfasst, das an einen Sockel (2) angrenzt, der mit unterschiedlichen Vertiefungen (6, 7) ausgestattet ist, die zum Aufnehmen der Behälter (10, 23) dienen, und einen Übertragungsarm (4), der sich beim Betrieb des Gerätes über dem Behälter (10, 23) erstreckt, wobei der Übertragungsarm (4) über einem drehenden Arbeitswerkzeug (21, 22, 29) Antriebsmittel (5) umfasst, **dadurch gekennzeichnet, dass** jede Vertiefung (6, 7) des Sockels (2) eine Form aufweist, die angepasst ist, um mit der Form des Behälters, der ihr zugeordnet wird, zusammenzuwirken, so dass die oberen Ränder aller Behälter (10, 23) auf eine gleiche Höhe gebracht werden.

2. Elektrohaushaltsgerät für kulinarische Zubereitungen nach Anspruch 1, **dadurch gekennzeichnet, dass** die untere Fläche des Übertragungsarms (4) beim Betrieb des Gerätes im Wesentlichen auf jener Höhe liegt, auf der die oberen Ränder aller Behälter (10, 23) liegen.

3. Elektrohaushaltsgerät für kulinarische Zubereitungen nach Anspruch 1 oder 2, **dadurch gekennzeichnet, dass** jeder der Behälter (10, 23) mit einem Deckel (11, 24) ausgestattet ist, der eine Aussparung zur Aufnahme (12) des Übertragungsarms (4) aufweist, der sich in diese Aussparung (12) einfügt, wenn das Gerät in Betriebsposition ist.

4. Elektrohaushaltsgerät für kulinarische Zubereitungen nach Anspruch 3, **dadurch gekennzeichnet, dass** der Teil des Übertragungsarms, der sich in die Aufnahmeaussparung einfügt, mindestens teilweise von einem biegsamen Material überzogen ist.

5. Elektrohaushaltsgerät für kulinarische Zubereitungen nach einem der Ansprüche 1 bis 4, **dadurch gekennzeichnet, dass** der Übertragungsarm (4) in Bezug auf das Gehäuse (1) geschwenkt werden kann.

6. Elektrohaushaltsgerät für kulinarische Zubereitungen nach einem der Ansprüche 3 bis 5, **dadurch gekennzeichnet, dass** der Deckel (11, 24) mit dem Übertragungsarm (4) fest verbunden sein kann.

7. Elektrohaushaltsgerät für kulinarische Zubereitungen nach einem der Ansprüche 1 bis 6, **dadurch gekennzeichnet, dass** die Vertiefungen (6, 7) zur Aufnahme der Behälter (10, 23) aus unterschiedlich tiefen Aussparungen bestehen.

8. Elektrohaushaltsgerät für kulinarische Zubereitungen nach einem der Ansprüche 1 oder 7, **dadurch gekennzeichnet, dass** die Vertiefungen (6, 7) zur Aufnahme der Behälter (10,23) konzentrisch sind.

9. Elektrohaushaltsgerät für kulinarische Zubereitungen nach einem der Ansprüche 1 bis 8, **dadurch gekennzeichnet, dass** jede der Vertiefungen (6, 7) zur Aufnahme der Behälter (10, 23) ein Stellsystem (6',7') aufweist, welches das Ausrichten der Behälter (10, 23) in Bezug auf das Gehäuse (1) des Gerätes ermöglicht.

10. Elektrohaushaltsgerät für kulinarische Zubereitungen nach einem der Ansprüche 1 bis 9, **dadurch gekennzeichnet, dass** das Gerät, das mit einem Motor ausgestattet ist, auf Höhe des Übertragungsarms (4) ein System zum Erfassen der Deckel (11, 24) der Behälter (10, 23) aufweist, das mit einer Motorkontrollvorrichtung zusammenwirkt, um die Ingangsetzung des Motors zu verhindern, wenn der Deckel (11, 24) nicht erfasst wird.

11. Elektrohaushaltsgerät für kulinarische Zubereitungen nach Anspruch 10, **dadurch gekennzeichnet, dass** das System zum Erfassen der Deckel (11, 24) der Behälter (10, 23) einen Schalter umfasst, der vom Übertragungsarm (4) auf Höhe seiner unteren Fläche getragen wird, wobei dieser Schalter mit einem Stift (15, 33) zusammenwirkt, der vom Deckel (11, 24) des Behälters (10, 23) getragen wird.
